# EUROPÄISCHE PATENTSCHRIFT

(11) **EP 1 440 670 B1**
(45) Veröffentlichungstag und Bekanntmachung des Hinweises auf die Patenterteilung: **11.10.2006**
(21) Anmeldenummer: 03001688.5
(22) Anmeldetag: 25.01.2003
(51) Int. Cl.: A61C 8/00

(54) **Temporärer Aufsatz für Kieferimplantate**
Temporary attachment for jaw implants
Accessoire temporaire pour les implants maxillaires

(43) Veröffentlichungstag der Anmeldung: 28.07.2004
(73) Patentinhaber: Dinkelacker, Wolfgang, Dr. med. dent., 71063 Sindelfingen (DE)
(72) Erfinder: Dinkelacker, Wolfgang, Dr. med. dent., 71063 Sindelfingen (DE)
(74) Vertreter: Kindermann, Manfred

(56) Entgegenhaltungen:
- WO-A-98/52490
- WO-A-99/26554
- DE-A- 19 705 571
- US-A- 5 599 185
- US-A- 6 120 292
- US-A1- 2002 004 189

## Beschreibung

### Bereich der Erfindung

Die Erfindung bezieht sich auf einen Aufsatz für Kieferimplantate, der nach dem Einsetzen des Implantats in den Kieferknochen mittels einer Schraube am Implantat befestigt wird.

### Stand der Technik

Bei Kieferimplantaten ist es bekannt, nach der Einpflanzung des Implantats in den Kieferknochen den Kopf des Implantats während der Einheilphase durch einen Aufsatz abzudecken, um den Implantatkopf gegen das Einlagern von Speiseresten und anderen Infektionserregern zu schützen. An Stelle dieses einstufigen Verfahrens kann auch in zwei Stufen vorgegangen werden, indem zunächst die Haut im Bereich der Implantatwunde nach der Operation über der Abdeckung vernäht wird, so dass die Abdeckung während der Einheilung vom Patienten nicht als störender Fremdkörper wahrgenommen wird.

Aus der FR-A-2720624 ist eine dachförmige Einheilkappe bekannt, die nach der Operation auf das Implantat aufgesetzt wird. Hierzu dienen scheibenförmige Vorsprünge an ihrer Unterseite der Kappe, die in entsprechende Ausnehmungen am Implantatkopf eingreifen. Eine knopfförmige Einheilkappe, deren Unterseite an die Form des Implantatkopfes angepasst ist die mit einer keilförmigen Verlängerung in eine konische Bohrung im Implantat eingreift, ist im US-Patent 5,636,989 offenbart. Bei einer anderen bekannten Ausführungsform wird eine Installationskappe am Kopf eines Zahnimplantats mittels einer Schraube in einer zentralen Gewindebohrung befestigt, die nach dem Entfernen der Kappe zur Befestigung eines Tragkörpers für einen Zahnersatz dient (US-Patent 5,209,659). Diese bekannten Implantataufsätze sind auf den Schutz des eingepflanzten Implantats beschränkt.

Es ist ferner bekannt, bei einem justierbaren Zahnimplantat den Tragkörper für den Zahnersatz am Implantat verstellbar anzuordnen, so dass nach dem Einsetzen des Implantats eine Korrektur oder Ausrichtung des Tragkörpers möglich ist, um Sitz des Zahnersatzes nachträglich zu verändern (US-Patent 5,195,891). Dieses Implantat weist als Tragkörper einen zweiteiligen Anker auf, dessen unterer Teil durch eine Schraubverbindung am Implantatkörper befestigt ist und dessen oberer Teil einen Winkel zur Implantatachse bildet und auf dem unteren Teil verdrehbar angeordnet ist. Eine aus Nylon bestehende Kappe wird durch eine Schnappverbindung auf den oberen Teil des Ankers aufgesetzt und dient als Basis für den Zahnersatz. Durch Verdrehen des oberen Teils des Ankers kann eine Ausrichtung der Position des Zahnersatzes erfolgen.

Des weiteren ist ein Dentalimplantat bekannt, auf das eine Schutzkappe aufgesetzt wird, die eine lippenseitig zu positionierende Abschrägung aufweist und zur Konditionierung des umgebenden Weichgewebes dient (US 6,120,292). Die Schutzkappe kann aus einem Plastikmaterial bestehen. Sie ist an eine zylindrische Führung des Implantats angepasst und liegt auf einer Schulter des Implantats auf. In dieser Position wird die Schutzkappe durch eine Schraube über einen begrenzten Zeitraum fixiert, während dem das Implantat im Kieferknochen einheilt.

### Zusammenfassung der Erfindung

Der Erfindung liegt die Aufgabe zugrunde, einen temporärer Aufsatz auf ein Kieferimplantat so zu gestalten, dass sie neben dem Schutz des Implantats auch eine verbesserte Anpassung des Weichteilgewebes oberhalb des Implantats entsprechend der mit dem Implantat zu verbindenden Suprastruktur zu ermöglichen.

Der temporäre Implantataufsatz, wie er in den Ansprüchen definiert ist, weist ein zwischen einem Basisteil und einem Kopfteil angeordnetes Formstück aus elastischem Material auf, das unter den Wirkung der Schraube verformbar ist und diese Verformung auf das umgebende Gewebe überträgt. Diese Anordnung hat den Vorteil, dass der Kanal in der Gingiva oberhalb des eingesetzten Implantats während der Einheilphase vorgeformt werden kann. Auf diese Weise kann das Weichteilgewebe während der Einheilung an die Form der mit dem Implantat zu verbindenden Suprastruktur angepasst werden. So kann durch wiederholtes Anziehen der Befestigungsschraube der Kanal im Weichgewebe erweitert werden, ohne dass es zu einer Gewebeverletzung kommt. Der zur Ausformung der Suprastruktur notwendige operative Eingriff kann so gering gehalten werden, womit auch die Gefahr von Infektionen und Entzündungen vermindert wird.

Gemäß vorteilhafter Ausführungen der Erfindung wird durch eine Profilierung des Basisteils oder des Kopfteils oder beider Teile eine bestimmte Verformung des Formstücks vorgegeben. Durch eine asymmetrische Profilierung kann eine unrunde oder einseitige Verformung des Formstücks vorgegeben werden. Zudem sind Basisteil oder Kopfteil oder beide in ihrer Winkellage in Bezug auf die Längsachse des Implantats verstellbar angeordnet, wodurch auch die Richtung der Verformung wählbar ist. Die Vorformung des Weichgewebes kann so in einer Weise erfolgen, dass die vorteilhaften Wirkungen insbesondere erreicht werden, wenn Korrekturen oder Anpassungen im Sitz der Suprastruktur auf dem Implantat notwendig sind.

### Beschreibung der Zeichnungen

Nachfolgend sind verschiedene Ausführungsformen der Erfindung anhand von Zeichnungen dargestellt. Es zeigen:
- Figur 1: eine Schnittdarstellung einer Ausführungsform des Implantataufsatzes gemäß der Erfindung mit profiliertem Kopf- und Basisteil;
- Figur 2: eine Schnittdarstellung des Implantataufsatzes nach Figur 1 in einem komprimierten Zustand;
- Figur 3: eine Schnittdarstellung einer weiteren Ausführungsform des erfindungsgemäßen Implantataufsatzes mit einem profilierten Basisteil und einem planen Kopfteil;
- Figur 4: eine Schnittdarstellung des Implantataufsatzes nach Figur 3 in einem komprimierten Zustand;
- Figur 5: eine Draufsicht auf den Implantataufsatz nach Figur 3 im komprimierten Zustand gemäß Figur 4;
- Figur 6: eine Schnittdarstellung einer weiteren Ausführungsformen des erfindungsgemäßen Implantataufsatzes;
- Figur 7: eine Schnittdarstellung einer weiteren Ausführungsformen des erfindungsgemäßen Implantataufsatzes mit verdrehbarem Kopfteil;
- Figur 8: eine Draufsicht auf den Implantataufsatz nach Figur 7;
- Figur 9: eine Schnittdarstellung des Implantataufsatzes von Figur 7 in einer um 90 Grad verdrehten Position; und
- Figur 10: eine Draufsicht auf den Implantataufsatz nach Figur 7 in der Position von Figur 9.

### Detaillierte Beschreibung von in den Zeichnungen dargestellten Ausführungsbeispielen der Erfindung

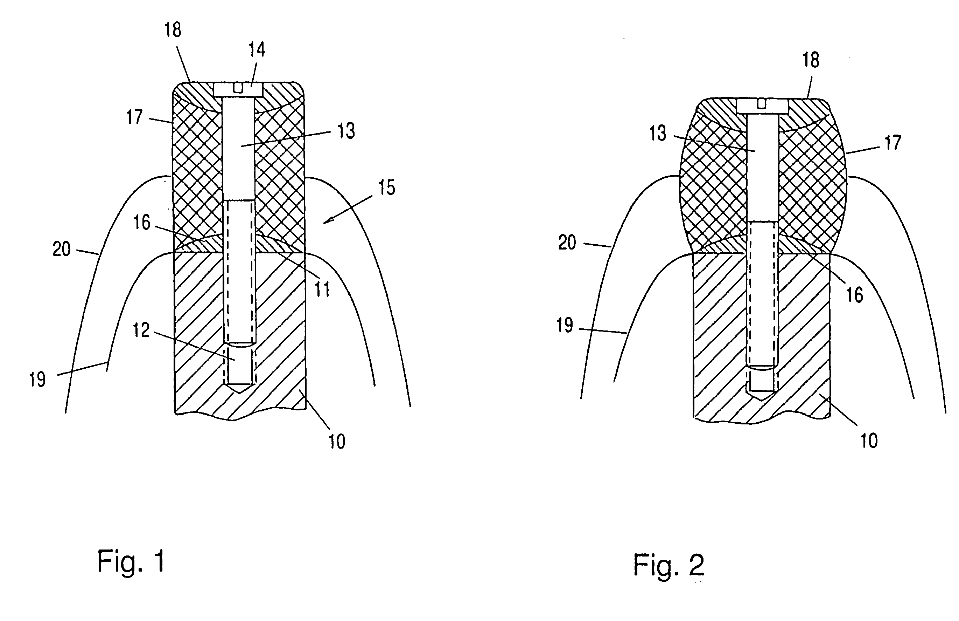

Die Figur 1 zeigt den Teilschnitt eines rotationssymmetrischen Kieferimplantats 10 mit einem planen Implantatkopf 11. Das Implantat 10 besteht vorzugsweise aus Titan oder einer Titanlegierung oder einem anderen geeigneten Material, wie z.B. Keramik oder Porzellan. Zur Verankerung des Implantats im Kiefer kann an seinem Umfang ein nicht dargestelltes System von Rillen und zylindrischen Abstufungen versehen sein, wie in EP-A-1013236 offenbart. Stattdessen kann der Implantatkörper als Schraube ausgebildet sein. Das Implantat 10 ist in der in Figur 1 dargestellten Ausführungsform zylindrisch ausgebildet und weist in Richtung seiner Längsachse eine zentrale Gewindebohrung 12 auf, in die eine Schraube 13 eingreift zur Befestigung einer nicht dargestellten Suprastruktur, wie z.B. einer Krone. Nach dem Einsetzen des Implantats in den Kieferknochen beginnt eine Einheilphase von einigen Monaten. Während dieser Zeit wird ein Aufsatz 15 mit dem Implantat 10 verbunden, wozu die Schraube 13 dient, die in die Gewindebohrung 12 eingeschraubt wird. Der Aufsatz 15 besteht aus einem Basisteil 16, einem Formstück 17 und einem Kopfteil 18. Diese Teile sind in ihrem Durchmesser an dem Durchmesser des Implantats 10 angepasst und weisen zentrale Bohrungen auf zur Aufnahme der Schraube 13. Das Basisteil 16 ist eine plan-konvexe Platte, die mit ihrer planen Oberfläche auf dem Implantatkopf 11 aufliegt und deren konvexe Oberfläche mit dem Formstück 17 in Kontakt steht. Wenn der Aufsatz 15 in Verbindung mit einem Implantat verwendet wird, das einen Implantatkopf im einem Profil umfasst, wie z.B. einseitige oder zweiseitige Abschrägungen, Sechskantvorsprünge oder ähnliches, wird das Basisteil auf der dem Implantat zugewandten Seite diesem Profil angepasst. Ebenso ist das Kopfteil 18 als plan-konvexe Platte ausgebildet, deren konvexe Oberfläche am Formstück 17 anliegt und in deren planen Oberseite ein Flachkopf 14 der Schraube 13 eingelassen ist. Basisteil 16 und Kopfteil 18 bestehen vorzugswiese aus dem gleichen Material wie das Implantat 10. Das Formstück 17 befindet sich zwischen der Basisteil 16 und der Kopfteil 18 und ist vorzugsweise durch konkave Ausnehmungen an die konvexen Oberflächen dieser Teile angepasst. Es besteht aus einem biokompatiblen, elastischen Material, vorzugsweise Silikon, das unter axialem Druck zusammengedrückt werden kann und dabei seinen Umfang vergrößert.

Nachdem das Implantat 10 in den Kieferknochen 19 eingesetzt worden ist, wird der Aufsatz 15 mit dem Implantat mit Hilfe der Schraube 13 verbunden, die hierzu soweit angezogen wird, dass die Teile 16, 17, 18 miteinander in Kontakt stehen und die Basisplatte 16 am Implantatkopf 11 anliegt. Danach wird die Gingiva 20 an dem Umfang des Aufsatzes 15 angelegt und vernäht. Der obere Rand Gingiva 20 liegt vorzugsweise in der Mitte der Höhe des Formstücks 15. Damit befindet sich der mittlere Teil des Formstücks, der die größte Ausdehnung erfährt, im Bereich der Durchgangsöffnung der Gingiva für die Aufnahme der Suprastruktur. Während dem sich anschließenden Prozess der Wundheilung findet eine enge Anlagerung von Zahnfleischgewebe am Formstück 15 statt. Die Einheilphase dauert einige Monate. Gegen Ende dieser Zeit wird die Schraube 13 wiederholt, z.B. im Wochenabstand, in einem Ausmaß angezogen, dass durch radiale Ausdehnung des Formstücks 17 eine Erweiterung des das Formstück umgebenden Gewebes erfolgt, ohne dass es dabei zu Einrissen der Gingiva 20 kommt. Unter der Wirkung der konvexen Oberflächen der Basisplatte 16 und der Kopfplatte 18 wird das Formstück 17 zusammengepresst. Hierbei vergrößert sich dessen Umfang tonnenförmig, wie aus Figur 2 ersichtlich ist. Unter der Wirkung dieser Verformung wird das oberhalb des Implantats 10 in der Gingiva 19 befindliche Loch vergrößert und an den Durchmesser der Suprastruktur angepasst, die nach Beendigung der Einheilphase auf das Implantat 10 aufgesetzt wird, nachdem zuvor der Aufsatz 15 entfernt worden. Hierzu ist lediglich ein geringfügiger Eingriff in die Gingiva erforderlich, da die Gingiva-Öffnung oberhalb des Implantats 10 durch die vorausgegangenen Erweiterungsschritte bereits an die Abmessungen der Suprastruktur angepasst worden ist. Zur Befestigung der Suprastruktur auf dem Implantat dient Gewindebohrung 12. Die Figur 2 zeigt den Zustand des Formstücks 17 am Ende der Einheilphase.

Alternativ kann der Aufsatz 15 auch erst nach dem Einheilen des Implantats 10 zum Einsatz kommen. In diesem Falle wird nach der Operation das eingesetzte Implantat mit einer herkömmlichen Einheilkappe verschlossen und Gingiva vernäht. Nachdem die Einheilung des Implantats erfolgt ist, wird die Gingiva wieder geöffnet und die Einheilkappe entfernt. Danach wird der Aufsatz 15 mit dem Implantat in der beschriebenen Weise verbunden. Die Gingiva 20 wird an dem Umfang des Aufsatzes 15 angelegt und soweit vernäht, dass nur der Schraubenkopf 12 frei bleibt. Nach einer Wundheilphase erfolgt das Nachstellen der Schraube 13 in der beschriebenen Weise zur Erweiterung der Gingiva-Öffnung für das Aufsetzten der Suprastruktur.

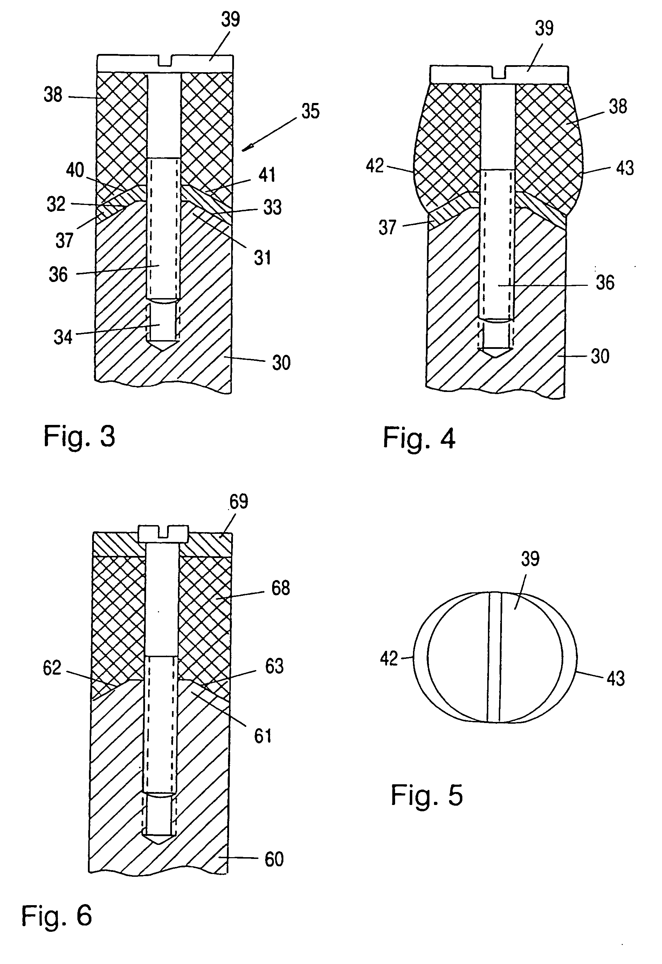

Wenn der Aufsatz 15 in Verbindung mit einem Implantat verwendet wird, das einen Implantatkopf im einem Profil umfasst, wie z.B. einseitige oder zweiseitige Abschrägungen, Sechskantvorsprünge oder ähnliches, wird das Basisteil auf der dem Implantat zugewandten Seite diesem Profil angepasst. Eine Beispiel für derartige Ausführungsform wird nachfolgend anhand der Figuren 3-5 beschrieben. Die Figur 3 zeigt den Teilschnitt eines rotationssymmetrischen Kieferimplantats 30 mit einem Implantatkopf 31, der ein Profil in Form einander gegenüberliegender Abschrägungen 32, 33 der im EP-A-0868889 dargestellten Art aufweist. Das Implantat 30 besteht wiederum vorzugsweise aus Titan oder einer Titanlegierung und weist an seinem Umfang ein nicht dargestelltes System von Rillen und zylindrischen Abstufungen auf, in EP-A-1013236 offenbart, oder ist für sich in bekannter Weise als Schraube ausgestaltet. Das Implantat 30 ist zylindrisch ausgebildet und weist in Richtung seiner Längsachse eine zentrale Gewindebohrung 34 auf zur Befestigung einer Suprastruktur. Nach dem Einsetzen des Implantats in den Kieferknochen beginnt eine Einheilphase von einigen Monaten. Während dieser Zeit wird ein Aufsatz 35 mit dem Implantat verbunden, wozu eine Schraube 36 dient, die in die Gewindebohrung 34 eingeschraubt wird. Der Aufsatz 35 besteht aus einem Basisteil 37, einem Formstück 38 und einem Schraubenkopf 39. Diese Teile sind in ihrem Durchmesser dem Durchmesser des Implantats 30 angepasst. Basisteil 36 und Formstück 37 besitzen zentrale Bohrungen zur Aufnahme der Schraube 36.

Das Formstück 38 besteht aus einem biokompatiblen elastischen Material wie das Formstück 17 von Figur 1. Das Basisteil 37 ist eine Platte, die an das Profil des Implantatkopfes 31 angepasst ist und auf diesem gegen Verdrehung gesichert aufliegt. Im Ausführungsbeispiel von Figur 3 besitzt der Implantatkopf 31 ein keilförmiges Profil, das durch buccalseitig und lingualseitig exponierten Abschrägungen 32, 33 bestimmt wird. Die dem Formstück zugewandte Oberfläche des Basisteils 37 weist ein entsprechendes keilförmiges Profil auf mit Flanken 40, 41. Die Figur 3 zeigt den Aufsatz 35 in einem Zustand, in dem die Schraube 36 nur soweit angezogen ist, dass die Teile 31, 37, 38 und 39 aneinander anliegen. Durch ein weiteres Anziehen der Schraube 36 wird das Formstück 38 zusammengepresst und verformt sich dadurch so, dass an seinem Umfang Ausbuchtungen 42, 43 entstehen (Figuren 4 und 5). Die Flanken 40, 41 erzeugen einen Druck auf das Formstück 38 von der Implantatachse weg nach außen. Andererseits erzeugt der planparallele Schraubenkopf 22 einen axialen Druck auf das Formstück 38, so dass dieses ein birnenförmiges Profil annimmt, wie in Figur 2 dargestellt. Die den Aufsatz umgebende Gingiva wird somit nur zur Buccalseite und zur Lingualseite hin ausgeweitet für die Aufnahme einer entsprechend geformten Suprastruktur.

Wie die Ausführung nach Figur 6 zeigt, kann bei einem Implantat 60 mit einem Implantatkopf 61, der ein zweiseitig abgeschrägtes Profil der in Verbindung mit Figur 3 beschriebenen Art aufweist, der Implantatkopf 61 die Funktion des Basisteils übernehmen. Die Wirkung der Schrägen 62, 63 des Implantatkopfes 61 auf ein Formstück 68 entsprechen dabei der Wirkung der Flanken 40, 41 auf das Formstück 38 im Ausführungsbeispiel nach den Figuren 3 bis 5. Anstelle des Schraubenkopfes, der dort die Funktion des Kopfteils erfüllt, ist das Kopfteil bei der Ausführung nach Figur 6 eine planparallele Platte 69.

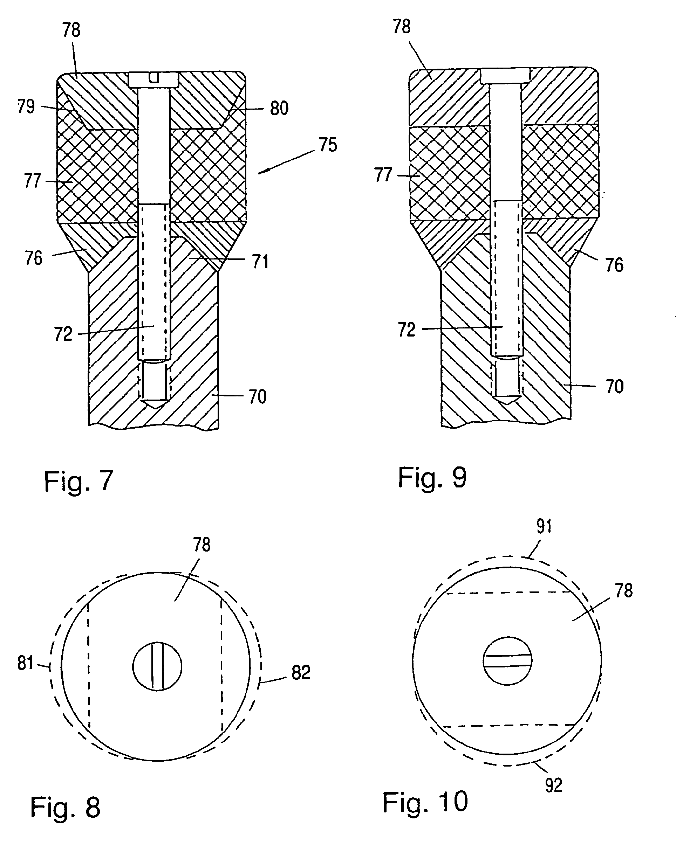

Die erfindungsgemäße Anordnung kann so ausgebildet werden, dass die zweiseitige Ausweitung der Gingiva in mesialer und distaler Richtung erfolgt. In Figur 7 ist ein zylindrisches Implantat 70 mit einem Implantatkopf 71 dargestellt, der ein zweiseitig abgeschrägtes Profil der in Verbindung mit Figur 3 dargestellten Art aufweist. Mit der Implantat 70 ist ein Aufsatz 75 mittels einer Schraube 72 verbunden. Der Aufsatz 75 besteht aus einem Basisteil 76, einem Formstück 77 und einem Kopfteil 78, die zentrale Bohrungen zur Aufnahme der Schraube 72 aufweisen. Der Durchmesser der Teile 76, 77 und 78 ist an die Größe der auf das Implantat aufzusetzende Suprastruktur angepasst und größer als der Durchmesser des Implantats 70. Das Formstück 77 ist aus einem biokompatiblen elastischen Material hergestellt wie das Formstück 17 in Figur 1. Das Basisteil 76 ist eine profilierte Platte, die an ihrer Unterseite entsprechend dem Profil des Implantatkopfes 71 geformt ist und auf diesem aufliegt. Die Oberseite des Basisteils ist plan ausgebildet. Auf ihr liegt das Formstück 77 auf. Ebenso ist das Kopfteil 78 als profilierte Platte ausgebildet, in deren plane Oberseite der Kopf der Schraube 72 eingelassen ist. Die dem Formstück zugewandte Unterseite des Kopfteils 78 weist Abschrägungen 79, 80 auf, die sich nach unten verjüngen und die in eine entsprechend geformten Ausnehmung des Formstücks 77 ragen. Wenn die Schraube 72 in der oben anhand der Figuren 1 und 3 beschriebenen weise angezogen wird, ergeben sich unter der Wirkung der Abschrägungen 79, 80 seitliche Ausbuchtungen 81, 82 am Formstück 77 (Figur 8). Die Ausbuchtungen 81, 82 können wie bei dem Ausführungsbeispiel von Figur 3 in Richtung der zur Buccalseite und zur Lingualseite hin orientiert sein. Durch ein Verdrehen des Kopfteils 78 um 90 Grad, wie in Figur 9 dargestellt, kann erreicht werden, dass bei entsprechendem Anziehen der Schraube 72 seitliche Ausbuchtungen 91, 92 des Formstücks 77 in mesialer und distaler Richtung erhalten werden (Figur 10). Der Aufsatz 75 kann so durch eine Änderung der Position des Kopfteils 78 an die Lage des Implantats im Kieferknochen und die Art der mit dem Implantat zu verbindenden Suprastruktur angepasst werden.

In weiterer Abwandlung des Ausführungsbeispiels nach den Figuren 6-8 kann das Kopfteil 78 asymmetrisch ausgebildet werden, indem auf der Unterseite des Kopfteils 78 anstelle von zwei Abschrägungen 79, 80 nur eine Abschrägung vorgesehen wird, während die andere Seite zum Umfang hin plan ausläuft und damit in diesem Bereich parallel zum Basisteil 76 verläuft. Bei einer solchen Ausführungsform wird das Formstück 77 asymmetrisch verformt, wenn die Schraube 72 entsprechend angezogen wird. Anstelle von zweiseitigen Ausbuchtungen 81, 82 oder 91, 92 wird jeweils nur eine Ausbuchtung 81 oder 82 bzw 91, 92 erhalten, die je nach Lage des Kopfteils 78 buccalseitig oder lingualseitig bzw. mesialseitig oder distalseitig ausgerichtet ist. Auf diese Weise kann der erfindungsgemäßen Aufsatzes auch eingesetzt werden, wenn eine Erweiterung der Gingiva im wesentlichen nach einer bestimmten Seite hin erfolgen soll.

Bei den anhand der Figuren 1-5 und 7-10 beschriebenen Ausführungsbeispielen der Erfindung kann die Anordnung von Basisteil und Formstück so getroffen werden, dass das elastische Formstück mit dem starren Basisteil oder mit dem starren Kopfteil oder mit beiden zu einer Baugruppe fest verbunden sind. Dies kann beispielsweise durch Klebeverbindung oder durch thermisches Verschmelzen erfolgen. Die Baugruppe wird an das Profil des Implantatkopfes angepasst, wie dies vorausgehend für das Basisteil beschrieben wurde. Die durch das Profil des Implantatkopfes erfolgende Sicherung gegen Verdrehung ist damit über das Basisteil auch für das Formstück wirksam.

Ein Aufsatz nach Art der Aufsätze 15, 35, 75 wird vorzugsweise in Verbindung mit Zahnimplantaten verwendet, ist aber nicht auf diese beschränkt, sondern kann auch bei anderen Implantaten eingesetzt werden, die einen Durchbruch durch Weichgewebe nach außen zum nachträglichen Anbringen anderer Einrichtungen erfordern und der während der Einheilphase entsprechend der Form dieser Einrichtungen vorgeformt werden soll.

Während die Erfindung anhand bevorzugter Ausführungsformen beschrieben wurde, können Abwandlungen und andere Ausführungsformen realisiert werden, ohne dass dadurch der in den Ansprüchen definierte Bereich der Erfindung verlassen wird.

## Patentansprüche

1. Ein Aufsatz für Kieferimplantate, der nach dem Einsetzen des Implantats (10, 30, 60, 70) in den Kieferknochen mittels einer Schraube (13, 36, 72) am Implantat befestigt wird,
**dadurch gekennzeichnet,**
**dass** der Aufsatz (15, 35, 75) ein zwischen einem Basisteil (16, 37, 61, 76) und einem Kopfteil (18, 39, 69, 78) angeordnetes Formstück (17, 38, 68, 77) aus einem biokompatiblen und elastischen Material aufweist, das unter den Wirkung der Schraube (13, 36, 72) verformbar ist und diese Verformung auf das umgebende weichteilgewebe überträgt.

2. Ein Aufsatz nach Anspruch 1, **dadurch gekennzeichnet, dass** das Formstück (17) an einem Basisteil (16) anliegt, das auf der dem Formstück abgewandten Seite an die Form des Implantatkopfes (31, 71) des Implantats (30, 70) angepasst ist und durch die Schraube (13, 72) mit dem Implantatkopfes (31, 71) verbunden wird.

3. Ein Aufsatz nach Anspruch 1, **dadurch gekennzeichnet, dass** das Basisteil (16) ein Profil aufweist, das die Art der Verformung des Formstücks (17) vorgibt.

4. Ein Aufsatz nach Anspruch 1, **dadurch gekennzeichnet, dass** das Kopfteil (18, 78) ein Profil aufweist, das die Art der Verformung des Formstücks (17, 77) vorgibt.

5. Ein Aufsatz nach Anspruch 3 oder 4, **dadurch gekennzeichnet, dass** das Basisteil (16) und das Kopfteil (18) jeweils ein konvexes Profil aufweisen, das eine tonnenförmige Verformung des Formstücks (17) vorgibt.

6. Ein Aufsatz nach Anspruch 4, **dadurch gekennzeichnet, dass** das Kopfteil (78) ein sich zum Formstück (77) hin verjüngendes Profil (79, 80) aufweist, das eine Verformung im Bereich des Kopfteils vorgibt.

7. Ein Aufsatz nach einem der Ansprüche 1 bis 6, **dadurch gekennzeichnet, dass** das Profil des Basisteils (37, 76) oder des Kopfteils (78) asymmetrisch ausgebildet ist, so daß es eine unrunde oder einseitige Verformung des Formstücks (38, 77) vorgibt.

8. Ein Aufsatz nach einem der Ansprüche 1 bis 6, **dadurch gekennzeichnet, dass** das Basisteil und/oder das Kopfteil (78) ein asymmetrisches Profil aufweisen und winkelverstellbar angeordnet sind, und dass durch Veränderung der Winkeleinstellung von Basisteil und/oder Kopfteil im Bezug auf die Längsachse des Implantats (70) die Richtung der Verformung wählbar ist.

9. Ein Aufsatz nach einem der Ansprüche 1 bis 8, **dadurch gekennzeichnet, dass** das Kopfteil durch den Kopf (39) der Befestigungsschraube (36) gebildet wird.

10. Ein Aufsatz nach einem der Ansprüche 1 bis 8, **dadurch gekennzeichnet, dass** das Kopfteil (18) durch eine Platte gebildet wird, die eine Bohrung für die Befestigungsschraube (13) aufweist, durch die die Platte mehr oder weniger stark gegen das Formstück (17) gepresst werden kann.

11. Ein Aufsatz nach einem der Ansprüche 1 bis 10, **dadurch gekennzeichnet, dass** daß das Formstück (17) zylindrisch ausgebildet ist.

12. Ein Aufsatz nach einem der Ansprüche 1 bis 11, **dadurch gekennzeichnet, dass** daß die Höhe des Formstücks (17, 38, 77) mindestens der Dicke der Gingiva-Gewebeschicht über dem Kieferknochen entspricht.

13. Ein Aufsatz nach einem der Ansprüche 1 bis 13, **dadurch gekennzeichnet, dass** das Formstück (17, 38, 77) aus Silikon besteht.

14. Ein Aufsatz nach Anspruch 1, **dadurch gekennzeichnet, dass** das Basisteil durch einen profilierten Implantatkopf (61) gebildet wird.

15. Ein Aufsatz nach einem der Ansprüche 1 bis 14, **dadurch gekennzeichnet, dass** das Basisteil (37, 76) gegenüber dem Implantatkopf (31, 71) des Implantats (30, 70) durch eine Einrichtung (40, 41) gegen Verdrehung gesichert ist.

16. Ein Aufsatz nach einem der Ansprüche 1 bis 15, **dadurch gekennzeichnet, dass** das Basisteil (16, 37, 76) und/oder das Kopf teil (18, 69, 78) mit dem Formstück (17, 38, 68, 77) fest verbunden sind.

17. Ein Aufsatz nach einem der Ansprüche 1 bis 12, **dadurch gekennzeichnet, dass** die Anordnung zur Aufnahme der Befestigungsschraube (13) für den Aufsatz auch der Befestigung der Suprastruktur am Implantat (10) dient.

## Claims

1. A temporary attachment for jaw implants, the temporary attachment being attached by means of a screw (13, 36, 72) after the implant (10, 30, 60, 70) has been inserted into the jawbone, **characterized in that** the temporary attachment (15, 35, 75) comprises a molded piece (17, 38, 68, 77) made of a biocompatible and elastic material and arranged between a base part (16, 37, 61, 76) and a head part (18, 39, 69, 78), said material being deformable under the action of the screw (13, 36, 72) and transferring this deformation to the surrounding soft part tissue.

2. A temporary attachment according to Claim 1, **characterized in that** the molded piece (17) is in contact with a base part (16) which is adapted to the shape of the implant head (31, 71) of the implant (30, 70) on the side facing away from the molded piece and is connected to the implant head (31, 71) by the screw (13, 72).

3. A temporary attachment according to Claim 1, **characterized in that** the base part (16) has a profile which predetermines the type of deformation of the molded piece (17).

4. A temporary attachment according to Claim 1, **characterized in that** the head part (18, 78) has a profile which predetermines the type of deformation of the molded piece (17, 77).

5. A temporary attachment according to Claim 3 or 4, **characterized in that** the base part (16) and the head part (18) each comprising a convex profile which predetermines a barrel-shaped deformation of the molded piece (17).

6. A temporary attachment according to Claim 4, **characterized in that** the head part (78) has a profile (79, 80) which tapers toward the molded piece (77) and predetermines a deformation in the area of the head part.

7. A temporary attachment according to any one of Claims 1 to 6, **characterized in that** the profile of the base part (37, 76) or of the head part (78) is designed to be asymmetrical, so that it predetermines a non-round or unilateral deformation of the molded piece (38, 77).

8. A temporary attachment according to any one of Claims 1 to 6, **characterized in that** the base part and/or the head part (78) comprising an asymmetrical profile and is arranged so that its angle is adjustable, and that the direction of deformation can be selected by changing the angular adjustment of base part and/or head part with respect to the longitudinal axis of the implant (70).

9. A temporary attachment according to any one of Claims 1 to 8, **characterized in that** the head part is formed by the head (39) of the fastening screw (36).

10. A temporary attachment according to any one of Claims 1 to 8, **characterized in that** the head part (18) is formed by a plate which comprises a bore for the fastening screw (13) by which the plate can be pressed more or less tightly against the molded piece (17).

11. A temporary attachment according to any one of Claims 1 to 10, **characterized in that** the molded piece (17) is cylindrical formed.

12. A temporary attachment according to any one of Claims 1 to 11, **characterized in that** the height of the molded piece (17, 38, 77) corresponds at least to the thickness of the gingival tissue layer over the jawbone.

13. A temporary attachment according to any one of Claims 1 to 13, **characterized in that** the molded piece (17, 38, 77) is made of silicone.

14. A temporary attachment according to Claim 1, **characterized in that** the base part is formed by a profiled implant head (61).

15. A temporary attachment according to any one of Claims 1 to 14, **characterized in that** the base part (37, 76) is secured to prevent rotation with respect to the implant head (31, 71) of the implant (30, 70) by means of a device (40, 41).

16. A temporary attachment according to any one of Claims 1 to 15, **characterized in that** the base part (16, 37, 76) and/or the head part (18, 69, 78) is/are fixedly connected to the molded piece (17, 38, 68, 77).

17. A temporary attachment according to any one of Claims 1 to 12, **characterized in that** the arrangement for accommodating the fastening screw (13) for the temporary attachment also serves for fastening the superstructure to the implant (10).

## Revendications

1. Un accessoire pour les implants maxillaires qui après mise en place de l'implant (10, 30, 60, 70) dans l'os maxillaire, est fixé au moyen d'une vis (13, 36, 72) sur l'implant,
**caractérisé en ce que**
l'accessoire (15, 35, 75) présente une pièce moulée (17, 38, 68, 77) en matériau biocompatible et élastique, qui est disposée entre une pièce de base (16, 37, 61, 76) et une pièce de tête (18, 39, 69, 78) et qui est déformable sous l'effet de la vis (13, 36, 76) et qui transpose cette déformation sur les tissus mous tout autour.

2. Un accessoire selon la revendication 1, **caractérisé en ce que** la pièce moulée (17) est en appui sur une pièce de base (16) qui est, sur la face tournée vers la pièce moulée, adaptée à la forme de la tête d'implant (31, 71) de l'implant (30, 70) et qui est associée par la vis (13, 72) à la tête d'implant (31, 71).

3. Un accessoire selon la revendication 1, **caractérisé en ce que** la pièce de base (16) présente un profil qui conditionne le type de déformation de la pièce moulée (17).

4. Un accessoire selon la revendication 1, **caractérisé en ce que** la pièce de tête (18, 78) présente un profil qui conditionne le type de déformation de la pièce moulée (17, 77).

5. Un accessoire selon la revendication 3 ou 4, **caractérisé en ce que** la pièce de base (16) et la pièce de tête (18) présentent respectivement un profil convexe qui conditionne une déformation de la pièce moulée (17) à la manière d'un tonneau.

6. Un accessoire selon la revendication 4, **caractérisé en ce que** la pièce de tête (78) présente un profil (79, 80) qui se rétrécit vers la pièce moulée (77) qui conditionne une déformation au niveau de la pièce de tête.

7. Un accessoire selon l'une des revendications 1 à 6, **caractérisé en ce que** le profil de la pièce de base (37, 76) ou de la pièce de tête (78) est conformé de manière asymétrique de sorte qu'il conditionne une déformation ovale ou unilatérale de la pièce moulée (38, 77).

8. Un accessoire selon l'une des revendications 1 à 6, **caractérisé en ce que** la pièce de base et/ou la pièce de tête (78) présentent un profil asymétrique et sont disposées selon un angle réglable et **en ce que** la modification du réglage de l'angle de la pièce de base et/ou de la pièce de tête par rapport à l'axe longitudinal de l'implant (70) permette de choisir l'orientation de la déformation.

9. Un accessoire selon l'une des revendications 1 à 8, **caractérisé en ce que** la pièce de tête est formée par la tête (39) de la vis de fixation (36).

10. Un accessoire selon l'une des revendications 1 à 8, **caractérisé en ce que** la pièce de tête (18) est formée par une plaque qui présente un perçage pour la vis de fixation (13), à l'aide de laquelle la plaque peut être pressée avec plus ou moins de force contre la pièce moulée (17).

11. Un accessoire selon l'une des revendications 1 à 10, **caractérisé en ce que** la pièce moulée (17) est conformée de manière cylindrique.

12. Un accessoire selon l'une des revendications 1 à 11, **caractérisé en ce que** la hauteur de la pièce moulée (17, 38, 77) correspond au moins à l'épaisseur de la couche du tissu gingival recouvrant l'os maxillaire.

13. Un accessoire selon l'une des revendications 1 à 13, **caractérisé en ce que** la pièce moulée (17, 38, 77) est constituée de silicone.

14. Un accessoire selon la revendication 1, **caractérisé en ce que** la pièce de base est formée par une tête d'implant (61) profilée.

15. Un accessoire selon l'une des revendications 1 à 14, **caractérisé en ce que** la pièce de base (37, 76) est sécurisée par un équipement (40, 41) contre la rotation par rapport à la tête d'implant (31, 71) de l'implant (30, 70).

16. Un accessoire selon l'une des revendications 1 à 15, **caractérisé en ce que** la pièce de base (16, 37, 76) et/ou la pièce de tête (18, 69, 78) sont fermement associées à la pièce moulée (17, 38, 68, 77).

17. Un accessoire selon l'une des revendications 1 à 12, **caractérisé en ce que** la disposition pour y loger la vis de fixation (13) de l'accessoire sert aussi à la fixation de la superstructure sur l'implant (10).
